# EUROPÄISCHE PATENTSCHRIFT

(11) **EP 3 713 698 B1**
(45) Veröffentlichungstag und Bekanntmachung des Hinweises auf die Patenterteilung: **20.03.2024**
(21) Anmeldenummer: 19704201.3
(22) Anmeldetag: 22.01.2019
(51) Int. Cl.: B22F 10/28, B22F 10/36, B29C 64/393, B33Y 10/00, B33Y 30/00, B33Y 50/02, B29C 64/153

(54) **SLM-ANLAGE UND VERFAHREN ZUM BETREIBEN DER SLM-ANLAGE**
SLM SYSTEM AND METHOD FOR OPERATING THE SLM SYSTEM
INSTALLATION DE FUSION PAR LASER ET PROCÉDÉ POUR FAIRE FONCTIONNER LADITE INSTALLATION DE FUSION PAR LASER

(30) Priorität: 21.02.2018 DE 102018202600
(43) Veröffentlichungstag der Anmeldung: 30.09.2020
(73) Patentinhaber: Siemens Energy Global GmbH & Co. KG, 81739 München (DE)
(72) Erfinder: GEISEN, Ole, 10781 Berlin (DE)
(86) Internationale Anmeldenummer: PCT/EP2019/051486
(87) Internationale Veröffentlichungsnummer: WO 2019/162018

(56) Entgegenhaltungen:
- EP-A1- 3 095 591
- WO-A1-2015/169309
- DE-A1-102007 056 984

## Beschreibung

Bei einer SLM-Anlage handelt es sich um eine Anlage, bei der durch selektives Laserschmelzen (englisch: selective laser melting, SLM) eines Pulvers ein Bauteil schichtweise aufgebaut wird. Bei großen Bauteilen kann ein sogenanntes hybrides selektives Laserschmelzen zum Einsatz kommen. Dabei wird zuerst ein Abschnitt des Bauteils durch ein anderes Herstellungsverfahren, wie beispielsweise durch Gießen, hergestellt. Anschließend wird der eine Abschnitt in die SLM-Anlage eingebracht und ein anderer Abschnitt des Bauteils durch das selektive Laserschmelzen auf den einen Abschnitt aufgebracht. Damit der eine Abschnitt und der andere Abschnitt möglichst genau aufeinanderpassen, wäre es wünschenswert, möglichst genau zu bestimmen, wo sich der eine Abschnitt in der SLM-Anlage befindet.

Dokument DE102007056984A1 offenbart ein Verfahren zum Herstellen eines dreidimensionalen Objekts durch Lasersintern, bei dem das Objekt durch schichtweises Verfestigen eines pulverförmigen Materials an den dem Objekt entsprechenden Stellen der jeweiligen Schicht mittels Einwirkung von Laserstrahlung gebildet wird, wobei ein IR-Strahlungsbild in einer aufgetragenen Pulverschicht erfasst wird, wobei anhand des IR-Strahlungsbildes Fehlstellen und/oder geometrische Unebenheiten der aufgetragenen Pulverschicht bestimmt werden.

Aufgabe der Erfindung ist es daher eine SLM-Anlage und ein Verfahren zum Betreiben der SLM-Anlage zu schaffen, mit denen mit einer möglichst hohen Genauigkeit bestimmbar ist, wo sich ein Bauteil in der SLM-Anlage befindet.

Die vorliegende Erfindung wird durch die unabhängigen Ansprüche definiert. Vorteilhafte Ausgestaltungen der Erfindung sind in den abhängigen Ansprüchen definiert.

Das erfindungsgemäße Verfahren zum Betreiben einer SLM-Anlage weist die Schritte auf: a) Bereitstellen eines Bauraums in der SLM-Anlage, der ein Bauteil und daran angrenzend ein Pulver aufweist, wobei eine nach oben gewandte Oberfläche des Bauraums Bereiche, die von dem Bauteil gebildet sind, und andere Bereiche aufweist, die von dem Pulver gebildet sind; b) Abrastern der nach oben gewandten Oberfläche mit Laserstrahlung, deren Leistung und Einwirkungsdauer derart gewählt werden, dass das Bauteil und das Pulver nicht geschmolzen werden; c) Detektieren von Strahlung, die aufgrund einer Wechselwirkung der Laserstrahlung mit dem Bauraum entsteht; d) Rückschließen von der in Schritt c) detektierten Strahlung auf eine Position und Abmessungen des Bauteils.

Mit dem erfindungsgemäßen Verfahren ist es möglich, die Position und die Abmessungen des Bauteils mit einer besonders hohen Genauigkeit zu bestimmen. Zudem kann in Schritt b) die gleiche Laserquelle wie bei einem anschließenden selektiven Laserschmelzen verwendet werden, so dass eine herkömmliche SLM-Anlage kostengünstig zum Durchführen des erfindungsgemäßen Verfahrens nachrüstbar ist.

Wie hoch die Leistung und die Einwirkungsdauer der Laserstrahlung zu wählen ist, hängt von vielen Eigenschaften des Bauteils und des Pulvers ab, wie beispielsweise von einer Oberflächenbeschaffenheit, von einer Absorptionsfähigkeit für die Laserstrahlung, von einer Wärmeleitfähigkeit, von einer Partikelgrößenverteilung und einer Packungsdichte des Pulvers. Diese Eigenschaften können sehr stark bei unterschiedlichen Materialien variieren. Jedoch ist es problemlos und ohne großen Aufwand möglich, Versuche durchzuführen, bei denen die Leistung der Laserstrahlung und/oder die Einwirkungsdauer der Laserstrahlung so lange variiert werden, das weder das Bauteil noch das Pulver geschmolzen werden und gleichzeitig in Schritt c) ausreichend von der Strahlung detektiert wird, dass die Position und die Abmessungen des Bauteils bestimmbar sind.

Bei der Wechselwirkung kann es sich beispielsweise um eine Reflektion und/oder um eine Streuung an der nach oben gewandten Oberfläche des Bauraums handeln. Dies bedeutet, dass in Schritt c) von der nach oben gewandten Oberfläche des Bauraums reflektierte und/oder gestreute Laserstrahlung gemessen wird. Bei der Wechselwirkung kann es sich beispielsweise auch um eine Erwärmung des Bauraums handeln, was bedeutet, dass die Laserstrahlung zumindest teilweise von dem Bauraum absorbiert wird und, erfindungsgemäß, in Schritt c) eine von dem Bauraum emittierte Wärmestrahlung gemessen wird.

Es ist bevorzugt, dass das Verfahren den Schritt aufweist: e) Identifizieren anhand der Abmessungen die in der nach oben gewandten Oberfläche des Bauraums angeordnete Fläche des Bauteils in einem dreidimensionalen Computermodell, das das Bauteil beinhaltet. Zudem weist das Verfahren den Schritt auf: f) Aufbringen mindestens einer Schicht des Pulvers auf die nach oben gewandte Oberfläche des Bauraums und Erweitern des Bauteils durch selektives Laserschmelzen des Pulvers mittels Laserstrahlung in jeder der Schichten anhand der Position und der in dem dreidimensionalen Computermodell identifizierten Fläche. In Schritt a) wird ein Abschnitt des Bauteils bereitgestellt und in Schritt f) ein anderer Abschnitt des Bauteils durch das selektive Laserschmelzen fertiggestellt. Durch die Verfahrensschritte e) und f) wird vorteilhaft erreicht, dass in Schritt f) genau derjenige Teil des Computermodells hergestellt wird, der von dem einen Abschnitt nicht gebildet ist, und somit die der eine Abschnitt und der Abschnitt besonders gut aufeinanderpassen. Beispielsweise können so Fertigungstoleranzen bei der Herstellung des einen Abschnitts kompensiert werden. Zudem ist es möglich das Bauteil frei von Kanten und/oder Graten herzustellen.

Es ist bevorzugt, dass in Schritten b) und f) die gleiche Laserquelle zum Erzeugen der Laserstrahlung verwendet wird. Dadurch wird beim Rückschließen auf die Position und die Abmessungen des Bauteils und bei dem selektiven Laserschmelzen ein identisches oder zumindest sehr ähnliches Raster verwendet, so dass der eine Abschnitt und der andere Abschnitt in dem Bauteil besonders gut aufeinander passen.

Gemäß der vorliegenden Erfindung ist die Strahlung eine Wärmestrahlung. Die Wärmestrahlung hat den Vorteil, dass sie gleichmäßig in alle Richtungen emittiert wird, so dass es eine große Flexibilität gibt, wo in der SLM-Anlage ein Detektor zum Detektieren der Wärmestrahlung angeordnet werden kann. Die Wärmestrahlung wird bevorzugt bei einer Detektionswellenlänge detektiert, die verschieden von der Wellenlänge der Laserstrahlung ist. Dadurch kann vorteilhaft vermieden werden, dass in Schritt c) die Laserstrahlung detektiert wird, was in Schritt d) das Rückschließen auf die Position und die Abmessungen des Bauteils verfälschen kann.

In Schritt c) wird bevorzugt derjenige Teil der Strahlung detektiert, der sich ausgehend von einem auf der nach oben gewandten Oberfläche des Bauraums angeordneten Auftreffpunkt der Laserstrahlung entgegen der Richtung der Laserstrahlung ausbreitet. Hier handelt es sich vorteilhaft um einen einfach zu justierenden Aufbau. Beispielsweise kann die Strahlung von der Laserstrahlung mittels eines Strahlteilers abgetrennt werden.

Alternativ ist bevorzugt, dass in Schritt c) derjenige Teil der Strahlung detektiert wird, der sich ausgehend von einem auf der nach oben gewandten Oberfläche des Bauraums angeordneten Auftreffpunkt der Laserstrahlung versetzt zu der Richtung der Laserstrahlung ausbreitet. Dadurch kann die Menge an der Laserstrahlung, die zusammen mit der Strahlung in Schritt c) detektiert wird und die in Schritt d) das Rückschließen auf die Position und die Abmessungen des Bauteils verfälschen kann, vorteilhaft vermindert.

Gemäß der vorliegenden Erfindung wird in Schritt d) ein Raster von in Schritt c) detektierten Intensitäten der Strahlung gebildet und Übergänge von den Bereichen zu den anderen Bereicher werden durch Identifizieren von Gradienten der Intensitäten in dem Raster bestimmt. In Abhängigkeit von den Eigenschaften des Bauteils und des Pulvers sowie in Abhängigkeit davon, wie die Strahlung beschaffen ist und wie sie detektiert wird, kann der Übergang von den Bereichen, die von dem Bauteil gebildet sind, zu den anderen Bereichen, die von dem Pulver gebildet sind, mit einer Erniedrigung der detektierten Intensität oder mit einer Erhöhung der detektierten Intensität einhergehen. Dabei ist bevorzugt, dass in Schritt c) zuerst das Raster grobmaschig abgerastert wird und nach dem Bestimmen der Übergänge in Schritt d) im Bereich der Übergänge das Raster feinmaschig abgerastert wird. Dadurch können auf die Position und die Abmessungen des Bauteils mit einer besonders hohen Genauigkeit in einer gleichzeitig kurzen Zeitdauer zurückgeschlossen werden.

Die Bereiche und die anderen Bereiche liegen bevorzugt in einer gleichen horizontalen Ebene, insbesondere liegen die Bereiche und die anderen Bereiche vollständig in einer gleichen horizontalen Ebene.

Die erfindungsgemäß SLM-Anlage ist eingerichtet, die Schritte des erfindungsgemäßen Verfahrens oder gemäß eines bevorzugten Verfahrens durchzuführen.

Im Folgenden wird anhand der beigefügten schematischen Zeichnungen die Erfindung näher erläutert.
- Figur 1: zeigt einen Querschnitt durch eine SLM-Anlage,
- Figur 2: zeigt ein Bauteil und
- Figur 3: zeigt das Bauteil mit einem Raster.

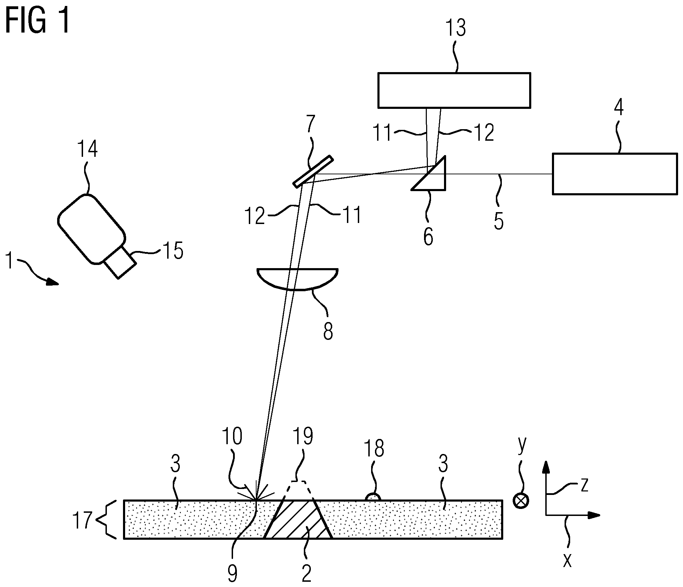

Wie es aus Figur 1 ersichtlich ist, wurde in einer SLM-Anlage 1 in einem Schritt a) ein Bauraum 17 bereitgestellt. Der Bauraum 17 weist ein Bauteil 2 und daran angrenzend ein Pulver 3 auf. Eine nach oben gewandte Oberfläche 18 des Bauraums 17 weist Bereiche, die von dem Bauteil 2 gebildet sind, und andere Bereiche auf, die von dem Pulver 3 gebildet sind. Die Bereiche und die anderen Bereiche liegen vollständig in einer gleichen horizontalen Ebene. Das Bauteil 2 kann durch ein von einem generativen Herstellungsverfahren, insbesondere selektives Laserschmelzen, verschiedenes Herstellungsverfahren hergestellt sein, beispielsweise durch Gießen. Bei dem Pulver 3 kann es sich beispielsweise um ein Metallpulver und/oder um ein Keramikpulver handeln.

Die SLM-Anlage 1 weist zudem eine Laserquelle 4 auf, die eingerichtet ist Laserstrahlung zu emittieren. Bei der Laserquelle 4 kann es sich beispielsweise um einen Nd:YAG Laser handeln. In diesem Fall kann die Laserstrahlung von der Fundamentalen des Nd:YAG Lasers gebildet sein und somit eine Wellenlänge von 1064 nm haben. Die Laserstrahlung breitet sich in einem Betrieb der SLM-Anlage 1 entlang eines Strahlengangs 5 aus. Die SLM-Anlage 1 weist einen Strahlteiler 6, einen Scanspiegel 7 und ein Linsensystem 8 auf. Wie es aus Figur 1 ersichtlich ist, ist die SLM-Anlage 1 eingerichtet, die Laserstrahlung via den Strahlteiler 6 auf den Scanspiegel 7 zu lenken. Der Scanspiegel 7 ist beweglich gelagert und von der SLM-Anlage 1 derart ansteuerbar, dass die Laserstrahlung via das Linsensystem 8, das in dem Strahlengang 5 zwischen dem Scanspiegel 7 und der nach oben gewandten Oberfläche 18 des Bauraums 17 angeordnet ist, auf jeden beliebigen Punkt der nach oben gewandten Oberfläche 18 des Bauraums 17 lenkbar ist. Das Linsensystem 18 ist eingerichtet die Laserstrahlung auf die nach oben gewandte Oberfläche 18 des Bauraums 17 zu fokussieren. Bei dem Linsensystem 18 handelt es beispielsweise um ein F-Theta Objektiv.

In einem Schritt b) wird die nach oben gewandten Oberfläche 18 mit der Laserstrahlung abgerastert, wobei die Leistung und die Einwirkungsdauer der Laserstrahlung derart gewählt werden, dass das Bauteil 2 und das Pulver 3 nicht geschmolzen werden. Zudem werden die Leistung und die Einwirkungsdauer der Laserstrahlung derart gewählt, dass das Bauteil 2 und das Pulver 3 aufgewärmt werden. In dem Fall, dass es sich bei der Laserquelle 4 um einen Nd:YAG Laser handelt, kann die Leistung durch eine Variation von Lichtleistung, mit der ein Nd:YAG Kristall des Nd:YAG Laser gepumpt wird, variiert werden. Aufgrund einer Wechselwirkung der Laserstrahlung mit dem Bauraum 17 an einem Auftreffpunkt 9 der Laserstrahlung, der auf der nach oben gewandten Oberfläche 18 des Bauraums 17 angeordnet ist, wird Wärmestrahlung 10 emittiert.

In einem Schritt c) wird die Wärmestrahlung detektiert. Dabei kann die Wärmestrahlung bei einer Detektionswellenlänge detektier werden, die verschieden von der Wellenlänge der Laserstrahlung ist. Bei dem Nd:YAG Laser kann die Detektionswellenlänge beispielsweise länger als 1064 nm sein. Dies kann beispielsweise mittels eines Detektors 13 oder mittels einer Kamera 14 erfolgen. Bei dem Detektor 13 ist es ausreichend, wenn er lediglich ein einzelnes Detektorelement aufweist, wie beispielsweise eine Photodiode. Die Kamera 14 hingegen weist eine zweidimensionale Matrix an Detektorelementen auf. Bei der Kamera 14 kann es sich beispielsweise um eine CMOS-Kamera oder um eine Mikrobolometerkamera handeln. Die Kamera 14 weist ein Objektiv 15 auf, das eingerichtet ist, die nach oben gewandte Oberfläche 18 des Bauraums 17 auf die zweidimensionale Matrix an den Detektorelementen abzubilden. Aufgrund des Scanspiegels 7 und des Linsensystems 8 wird es schwierig sein, die Kamera 14 senkrecht auf die nach oben gewandte Oberfläche 18 des Bauraums 17 zu richten. Die Abbildungsfehler, die aufgrund einer schrägen Ausrichtung der Kamera 14 auf die nach oben gewandte Oberfläche 18 des Bauraums 17 entstehen, können beispielsweise korrigiert werden, indem für das Objektiv 15 ein Scheimpflug Objektiv verwendet wird.

Figur 1 zeigt, dass der Detektor 13 angeordnet ist, die an dem Strahlteiler 6 reflektierte Wärmestrahlung zu detektieren. Es ist ebenso denkbar, dass der Detektor 13 an ein einer anderen Position in der SLM-Anlage angeordnet ist, solange das Sichtfeld des Detektors 13 die vollständige nach oben gewandte Oberfläche 18 des Bauraums 17 beinhaltet. Die von dem Strahlteiler 6 reflektierte Wärmestrahlung zu detektieren hat den Vorteil, dass das Linsensystem 8 eine größere Menge an der Infrarotstrahlung einsammelt und auf den Detektor 13 leitet, als wenn der Detektor 13 an der anderen Position angeordnet ist. Figur 1 zeigt einen ersten Strahlengang 11 der Wärmestrahlung 10, der derjenigen Teil der Wärmestrahlung beschreibt, der ausgehend von dem Auftreffpunkt 9 der Laserstrahlung sich entgegen der Richtung der Laserstrahlung ausbreitet. Außerdem ist ein zweiter Strahlengang 12 der Wärmestrahlung 10 eingezeichnet, der derjenigen Teil der Wärmestrahlung detektiert ist, der sich ausgehend von dem Auftreffpunkt 9 der Laserstrahlung versetzt zu der Richtung der Laserstrahlung ausbreitet. Es hierbei denkbar, dass in Schritt c) die Wärmestrahlung von nur dem Strahlengang 11, von nur dem Strahlengang 12 oder von beiden Strahlengängen 11 und 12 detektiert wird. Der erste Strahlengang 10 kann auch die Laserstrahlung aufweisen. Beispielsweise kann die Laserstrahlung in dem ersten Strahlengang 10 von dem Linsensystem 8 zurückreflektiert worden sein und unvollständig an dem Strahlteiler 6 von der Wärmestrahlung 10 abgetrennt worden sein. Diese unvollständig abgetrennte Laserstrahlung kann die Detektion der Wärmestrahlung stören. Hier kann es vorteilhaft sein, lediglich die Wärmestrahlung in dem zweiten Strahlengang 11 zu detektieren.

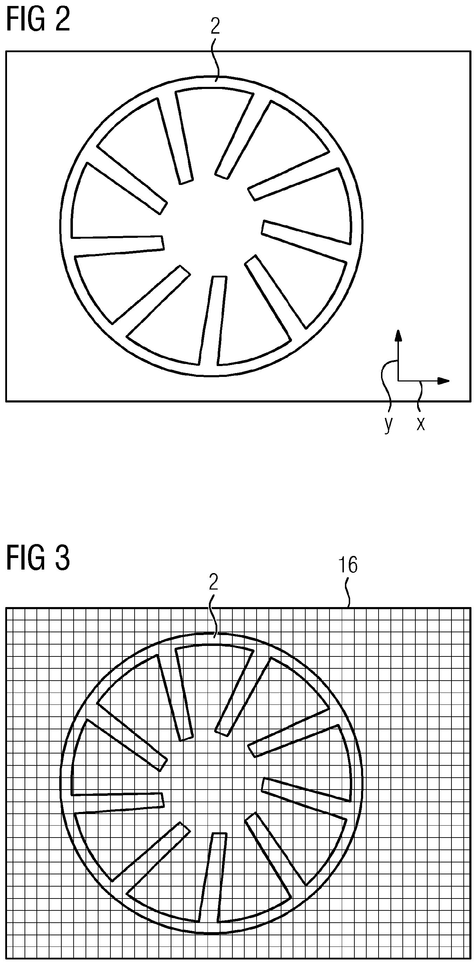

In einem Schritt d) wird von der in Schritt c) detektierten Wärmestrahlung auf eine Position und Abmessungen des Bauteils 2 zurückgeschlossen. Dazu wird ein Raster 16 von in Schritt c) detektierten Intensitäten der Strahlung gebildet und Übergänge von den Bereichen zu den anderen Bereichen werden durch Identifizieren von Gradienten der Intensitäten in dem Raster 16 bestimmt. Wie es aus Figuren 1 und 3 ersichtlich ist, wird das Raster 16 in x-Richtung und in y-Richtung aufgespannt. Zum Vergleich sind in Figur 1 ebenfalls die x-Richtung, die y-Richtung und zusätzlich noch eine z-Richtung eingezeichnet. Es ist denkbar, dass in Schritt c) zuerst das Raster 16 grobmaschig abgerastert wird und nach dem Bestimmen der Übergänge in Schritt d) im Bereich der Übergänge das Raster 16 feinmaschig abgerastert wird.

In einem Schritt e) wird anhand der Abmessungen die in der nach oben gewandten Oberfläche 18 des Bauraums 17 angeordnete Fläche des Bauteils 2 in einem dreidimensionalen Computermodell 19 identifiziert, das das Bauteil 2 beinhaltet. Das Computermodell 19 ist in Figur 1 veranschaulicht und weist einen gestrichelten gezeichneten Abschnitt des Bauteils 2, der der eine Abschnitt des Bauteils 2 ist, und einen schraffiert gezeichneten Abschnitt des Bauteils 2 auf, der der andere Abschnitt des Bauteils 2 ist. In einem Schritt f) wird mindestens eine Schicht des Pulvers 3 auf die nach oben gewandte Oberfläche 18 des Bauraums 17 aufgebracht und das Bauteils 2 wird erweitert durch selektives Laserschmelzen des Pulvers 3 mittels Laserstrahlung in jeder der Schichten anhand der Position und der in dem dreidimensionalen Computermodell 19 identifizierten Fläche. Dies ist besonders relevant wenn der Querschnitt des Bauteils 2, wie in Figur 1 dargestellt, in der z-Richtung variiert. In Schritten b) und f) kann, wie in Figur 1 dargestellt, die gleiche Laserquelle 4 zum Erzeugen der Laserstrahlung verwendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, der durch die Ansprüche definiert wird, zu verlassen.

## Patentansprüche

1. Verfahren zum Betreiben einer SLM-Anlage (1), mit den Schritten:
a) Bereitstellen eines Bauraums (17) in der SLM-Anlage (1), der ein Bauteil (2) und daran angrenzend ein Pulver (3) aufweist, wobei eine nach oben gewandte Oberfläche (18) des Bauraums (17) Bereiche, die von dem Bauteil (2) gebildet sind, und andere Bereiche aufweist, die von dem Pulver (3) gebildet sind;
b) Abrastern der nach oben gewandten Oberfläche (18) mit Laserstrahlung, deren Leistung und Einwirkungsdauer derart gewählt werden, dass das Bauteil (2) und das Pulver (3) nicht geschmolzen werden;
c) Detektieren von Strahlung, die aufgrund einer Wechselwirkung der Laserstrahlung mit dem Bauraum (17) entsteht, wobei die Strahlung eine Wärmestrahlung (10) ist;
d) Rückschließen von der in Schritt c) detektierten Strahlung auf eine Position und Abmessungen des Bauteils (2), wobei ein Raster (16) von in Schritt c) detektierten Intensitäten der Strahlung gebildet wird und Übergänge von den Bereichen zu den anderen Bereichen durch Identifizieren von Gradienten der Intensitäten in dem Raster (16) bestimmt werden.

2. Verfahren gemäß Anspruch 1, mit dem Schritt:
e) Identifizieren anhand der Abmessungen die in der nach oben gewandten Oberfläche (18) des Bauraums (17) angeordnete Fläche des Bauteils (2) in einem dreidimensionalen Computermodell (19), das das Bauteil (2) beinhaltet.

3. Verfahren gemäß Anspruch 2, mit dem Schritt:
f) Aufbringen mindestens einer Schicht des Pulvers (3) auf die nach oben gewandte Oberfläche (18) des Bauraums (17) und Erweitern des Bauteils (2) durch selektives Laserschmelzen des Pulvers (3) mittels Laserstrahlung in jeder der Schichten anhand der Position und der in dem dreidimensionalen Computermodell (19) identifizierten Fläche.

4. Verfahren gemäß Anspruch 3, wobei in Schritten b) und f) die gleiche Laserquelle (4) zum Erzeugen der Laserstrahlung verwendet wird.

5. Verfahren gemäß einem der Ansprüche 1 bis 4, wobei die Wärmestrahlung (10) bei einer Detektionswellenlänge detektiert wird, die verschieden von der Wellenlänge der Laserstrahlung ist.

6. Verfahren gemäß einem der Ansprüche 1 bis 5, wobei in Schritt c) derjenige Teil der Strahlung detektiert wird, der sich ausgehend von einem auf der nach oben gewandten Oberfläche (18) des Bauraums (17) angeordneten Auftreffpunkt (9) der Laserstrahlung entgegen der Richtung der Laserstrahlung ausbreitet.

7. Verfahren gemäß einem der Ansprüche 1 bis 6, wobei in Schritt c) derjenige Teil der Strahlung detektiert wird, der sich ausgehend von einem auf der nach oben gewandten Oberfläche (18) des Bauraums (17) angeordneten Auftreffpunkt (9) der Laserstrahlung versetzt zu der Richtung der Laserstrahlung ausbreitet.

8. Verfahren gemäß einem der Ansprüche 1 bis 7, wobei in Schritt c) zuerst das Raster (16) grobmaschig abgerastert wird und nach dem Bestimmen der Übergänge in Schritt d) im Bereich der Übergänge das Raster (16) feinmaschig abgerastert wird.

9. Verfahren gemäß einem der Ansprüche 1 bis 8, wobei die Bereiche und die anderen Bereiche in einer gleichen horizontalen Ebene liegen, insbesondere liegen die Bereiche und die anderen Bereiche vollständig in einer gleichen horizontalen Ebene.

10. SLM-Anlage (1), die eingerichtet ist, die Schritte des Verfahrens gemäß einem der Ansprüche 1 bis 9 durchzuführen.

## Claims

1. Method for operating an SLM system (1), having the steps:
a) providing a construction space (17) in the SLM system (1), which construction space comprises a component (2) and a powder (3) adjacent thereto, wherein an upward facing surface (18) of the construction space (17) has regions that are formed by the component (2) and other regions that are formed by the powder (3);
b) scanning the upward facing surface (18) with laser radiation, the power and duration of action of which are selected in such a way that the component (2) and the powder (3) are not melted;
c) detecting radiation that results from interaction of the laser radiation with the construction space (17), wherein the radiation is thermal radiation (10);
d) inferring a position and dimensions of the component (2) from the radiation detected in step c), wherein a grid (16) of intensities of the radiation detected in step c) is formed and transitions from the regions to the other regions are determined by means of identifying gradients of the intensities in the grid (16).

2. Method according to Claim 1, having the step:
e) identifying, on the basis of the dimensions, the area of the component (2) arranged in the upward facing surface (18) of the construction space (17) in a three-dimensional computer model (19) which includes the component (2).

3. Method according to Claim 2, having the step:
f) applying at least one layer of the powder (3) to the upward facing surface (18) of the construction space (17) and extending the component (2) by means of selective laser melting of the powder (3) using laser radiation in each of the layers on the basis of the position and the area identified in the three-dimensional computer model (19) .

4. Method according to Claim 3, wherein the same laser source (4) is used for generating the laser radiation in steps b) and f).

5. Method according to one of Claims 1 to 4, wherein the thermal radiation (10) is detected at a detection wavelength which is different from the wavelength of the laser radiation.

6. Method according to one of Claims 1 to 5, wherein, in step c), that part of the radiation which, emanating from a point of incidence (9) of the laser radiation arranged on the upward facing surface (18) of the construction space (17), propagates counter to the direction of the laser radiation is detected.

7. Method according to one of Claims 1 to 6, wherein, in step c), that part of the radiation which, emanating from a point of incidence (9) of the laser radiation arranged on the upward facing surface (18) of the construction space (17), propagates offset to the direction of the laser radiation is detected.

8. Method according to one of Claims 1 to 7, wherein, in step c), first the grid (16) is scanned with a coarse mesh and, after determining the transitions in step d), the grid (16) is scanned with a fine mesh in the region of the transitions.

9. Method according to one of Claims 1 to 8, wherein the regions and the other regions lie in a same horizontal plane, in particular the regions and the other regions lie completely in a same horizontal plane.

10. SLM system (1) which is configured to carry out the steps of the method according to one of Claims 1 to 9.

## Revendications

1. Procédé pour faire fonctionner une installation (1) de fusion par laser comprenant les stades :
a) on dispose dans l'installation (1) de fusion par laser d'un espace (17) de construction, qui a une pièce (2) et une poudre (3) qui en est voisine, dans lequel une face (18) tournée vers le haut de l'espace (17) de construction a des parties qui sont formées par la pièce (2) et d'autres parties qui sont formées par la poudre (3) ;
b) on quadrille la face (18) tournée vers le haut par du rayonnement laser, dont on choisit la puissance et la durée d'action, de manière à ce que la pièce (2) et la poudre (3) ne fondent pas ;
c) on détecte du rayonnement, qui se créé en raison d'une interaction entre le rayonnement laser et l'espace (17) de construction, le rayonnement étant un rayonnement (10) calorifique ;
d) on déduit du rayonnement détecté au stade c) une position et des dimensions de la pièce (2), dans lequel on forme un quadrillage (16) d'intensités, détectées au stade c), du rayonnement et on détermine des passages des parties aux autres parties en identifiant des gradients des intensités dans le quadrillage (16).

2. Procédé suivant la revendication 1, comprenant le stade :
e) on identifie, à l'aide des dimensions, la surface, disposée dans la face (18) de l'espace (17) de construction tournée vers le haut, de la pièce (2) dans un modèle (19) d'ordinateur en trois dimensions, qui contient la pièce (2).

3. Procédé suivant la revendication 2, comprenant le stade :
f) on dépose au moins une couche de la poudre (3) sur la face (18), tournée vers le haut, de l'espace (17) de construction et on agrandit la pièce (2) par fusion laser sélective de la poudre (3) au moyen du rayonnement laser dans chacune des couches à l'aide de la position et de la surface identifiée dans le modèle (19) d'ordinateur en trois dimensions.

4. Procédé suivant la revendication 3, dans lequel dans les stades b) et f) on utilise la même source (4) pour la production du rayonnement laser.

5. Procédé suivant l'une des revendications 1 à 4, dans lequel on détecte le rayonnement (10) calorifique à une longueur d'onde de détection, qui est différente de la longueur d'onde du rayonnement laser.

6. Procédé suivant l'une des revendications 1 à 5, dans lequel dans le stade c) on détecte la partie du rayonnement, qui se propage dans le sens contraire au sens du rayonnement laser à partir d'un point (9) d'incidence du rayonnement laser disposé sur la face (18), tournée vers le haut, de l'espace (17) de construction.

7. Procédé suivant l'une des revendications 1 à 6, dans lequel on détecte dans le stade c) la partie du rayonnement, qui se propage d'une manière décalée par rapport à la direction du rayonnement laser à partir du point (9) d'incidence du rayonnement laser disposé sur la face (18), tournée vers le haut, de l'espace (17) de construction.

8. Procédé suivant l'une des revendications 1 à 7, dans lequel dans le stade c) on quadrille d'abord le quadrillage (16) à grosses mailles et, après la détermination des passages, on quadrille à mailles fines le quadrillage (16) dans le stade d) dans la partie des passages.

9. Procédé suivant l'une des revendications 1 à 8, dans lequel les parties et les autres parties sont dans un même plan horizontal, en particulier les parties et les autres parties sont entièrement dans un même plan horizontal.

10. Installation (1) de fusion par laser, qui est agencée pour effectuer les stades du procédé suivant l'une des revendications 1 à 9.
